# EUROPEAN PATENT APPLICATION

(11) **EP 2 960 472 A1**
(43) Date of publication of application: **30.12.2015**
(21) Application number: 15164398.8
(22) Date of filing: 21.04.2015
(51) Int. Cl.: F02D 41/12, F02D 41/14, B60W 30/14, B60W 10/00, B60W 50/08

(54) **CONTROL DEVICE AND CONTROL METHOD FOR FUEL INJECTION CUT DURING OPERATION OF VEHICLE SPEED LIMITING DEVICE**

(30) Priority: 21.04.2014 JP 2014087440
(71) Applicant: Bosch Corporation, Tokyo 150-8360 (JP)
(72) Inventor: Ratnasekara, T. A. Shiron Darshana, Kanagawa, 2248501 (JP); Taura, Yasuhiro, Kanagawa, 2248501 (JP)
(74) Representative: Isarpatent

(57) **Abstract**

Provided is a control device and a control method which can realize a fuel injection cut even when a driver steps in an accelerator pedal during a period where a speed limiting control of a vehicle is performed. According to one embodiment of the present invention, there is provided a vehicle speed limiting device of a vehicle. The vehicle speed limiting device includes: an engine control part for controlling an operation of an engine of the vehicle. The engine control part is configured to control the engine such that when a vehicle speed limiting function is operated, a vehicle speed limiting request torque with respect to the engine does not exceed a predetermined value determined based on a set vehicle speed. The engine control part is also configured to control the engine such that a fuel injection cut is performed in a case (1) where the vehicle speed limiting request torque is smaller than a minimum combustion torque corresponding to a minimum torque value which is realizable by the combustion in the engine in a state where the vehicle speed limiting function is operated and a driver operates an accelerator pedal of the vehicle.

## Description

### BACKGROUND OF THE INVENTION

### 1. Field of the Invention

The present invention relates to a control device and a control method for a fuel injection cut during an operation of a vehicle speed limiting device.

### 2. Description of the Related Art

Conventionally, there has been known a vehicle speed limiting device of a vehicle which performs an ASL (Adjustable Speed Limiter) control which prevents an own vehicle from being accelerated exceeding a predetermined speed set by a driver even when the driver steps in an accelerator pedal. According to such an ASL control, by preliminarily setting a predetermined vehicle speed, the driver can eliminate a possibility that the own vehicle is inadvertently accelerated exceeding a limit speed, for example (see JP-A-2010-6334(patent literature 1) and JP-A-2011-157932(patent literature 2)).

### SUMMARY OF THE INVENTION

In a state where a speed limiting control such as an ASL control is performed, when a predetermined vehicle speed is set to a speed slower than an actual vehicle speed during traveling of a vehicle or when an actual vehicle speed exceeds a predetermined vehicle speed on a descending slope, a vehicle intends to decrease a speed thereof to the predetermined vehicle speed by a speed limiting control. However, at this point of time, when a driver steps in an accelerator pedal, a fuel injection cut is not performed. Accordingly, the deceleration has been realized by performing a control where ignition timing of an engine is set at a most delayed angle and an amount of air is minimized. However, there exists a possibility that this method cannot necessarily acquire the sufficient deceleration. Further, when such a state continues for a long time, there may be a case that a risk of the deterioration of a catalyst attributed to the occurrence of misfire is increased.

According to one aspect of the present invention, there is provided a vehicle speed limiting device of a vehicle. The vehicle speed limiting device includes: an engine control part for controlling an operation of an engine of the vehicle. The engine control part is configured to control the engine such that when a vehicle speed limiting function is operated, a vehicle speed limiting request torque with respect to the engine does not exceed a predetermined value determined based on a set vehicle speed. The engine control part is also configured to control the engine such that a fuel injection cut is performed in a case (1) where the vehicle speed limiting request torque is smaller than a minimum combustion torque corresponding to a minimum torque value which is realizable by the combustion in the engine in a state where the vehicle speed limiting function is operated and a driver operates an accelerator pedal of the vehicle.

In another aspect of the present invention, the engine control part of the vehicle speed limiting device is configured to control the engine such that the fuel injection cut is performed in a case (1) where a vehicle speed limiting request torque is smaller than a minimum combustion torque corresponding to a minimum torque value realized by the combustion in the engine and in a case (2) where a speed of the vehicle exceeds the set vehicle speed by a predetermined value.

According to another aspect of the present invention, there is provided a method for limiting a vehicle speed of a vehicle. The method includes the step of controlling an engine such that when a vehicle speed limiting function is operated, a vehicle speed limiting request torque with respect to the engine does not exceed a predetermined value determined based on a set vehicle speed. The method also includes the step of controlling the engine such that a fuel injection cut is performed in a case (1) where the vehicle speed limiting request torque is smaller than a minimum combustion torque corresponding to a minimum torque value which is realizable by the combustion in the engine in a state where the vehicle speed limiting function is operated and a driver operates an accelerator pedal of the vehicle.

According to another aspect of the present invention, the method of limiting a vehicle speed of a vehicle further includes the step of controlling the engine such that the fuel injection cut is performed in a case (1) where the vehicle speed limiting request torque is smaller than a minimum combustion torque corresponding to a minimum torque value which is realizable by the combustion in the engine and in a case (2) where a speed of the vehicle exceeds the set vehicle speed by a predetermined value.

### BRIEF DESCRIPTION OF THE DRAWINGS

Fig. 1 is a schematic view showing the constitution of a vehicle speed limiting device of a vehicle according to one embodiment of the present invention;
Fig. 2 is a timing chart showing timing at the time of determining a fuel injection cut flag according to one embodiment of the present invention;
Fig. 3 is a graph schematically showing a torque behavior of a vehicle at the time of determining the fuel injection cut flag according to one embodiment of the present invention;
Fig. 4 is a flowchart for determining whether or not a fuel injection cut can be performed by the speed limiting device of a vehicle according to one embodiment of the present invention; and
Fig. 5 is a schematic view showing the behavior of the vehicle to which a fuel injection cut control of a vehicle is applied using a fuel injection cut permission vehicle speed region according to one embodiment of the present invention.

### DESCRIPTION OF PREFERRED EMBODIMENTS

Hereinafter, an embodiment of a vehicle speed limiting device of a vehicle according to the present invention is explained with reference to attached drawings. In the attached drawings, identical or similar elements are given same or similar reference symbols. In the explanation of the respective embodiments, the overlapped explanation relating to identical or similar elements may be omitted. Further, the technical features described in each embodiment are applicable to other embodiments provided that the technical features are not contradictory to each other.

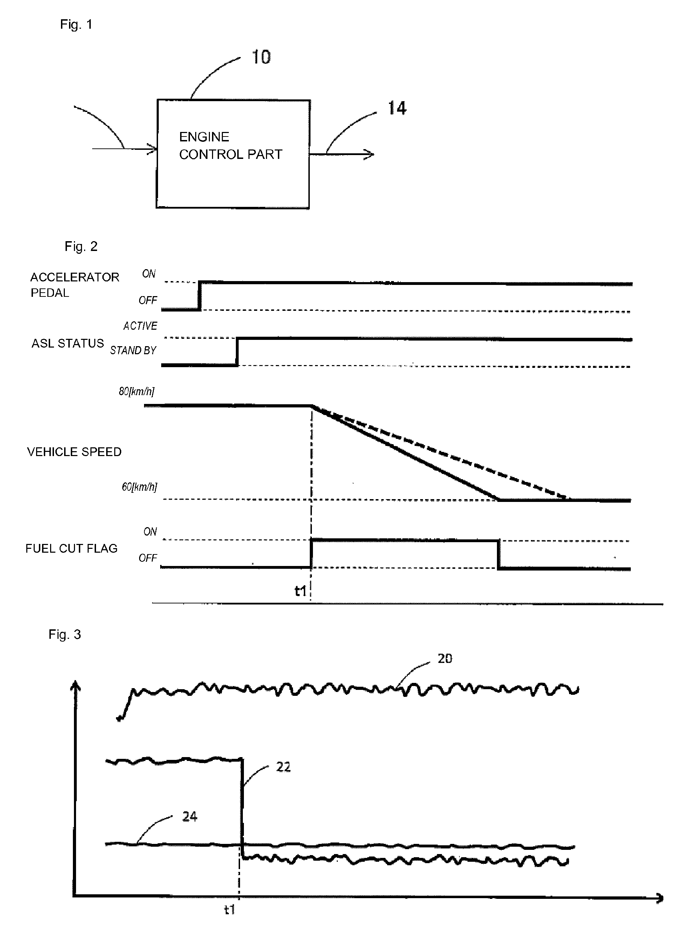

Fig. 1 shows an engine control part 10 used for a vehicle speed limiting device according to one embodiment. The engine control part 10 is mounted on a vehicle such as an automobile, and is configured to control an engine. The structure of the vehicle is not the gist of the present invention and hence, the structure of the vehicle is not described in detail. The engine control part 10 according to one embodiment of the present invention may be configured as an independent hardware or may be installed as another software on the same hardware as other control devices.

The engine control part 10 is configured to receive various information 12. For example, the engine control part 10 may receive information such as an ASL control status, an accelerator pedal position, a driver request torque, an ASL request torque, a minimum combustion torque, and an engine speed. The ASL control status is constituted of three kinds of statuses, that is, ACTIVE, STANDBY, and OFF. ACTIVE is a state where output limiting by the ASL request torque is effective, STANDBY is a state where there is no vehicle speed setting operation by a driver so that the engine control part 10 is in a standby state, an OFF is a state where an ASL control is invalidated. An accelerator pedal position is an opening of an accelerator pedal detected by an accelerator pedal position sensor arranged on the accelerator pedal of the vehicle. A driver request torque is a request torque for the engine which is calculated based on vehicle conditions such as an accelerator pedal position determined by an accelerator pedal operation by a driver and an engine speed. An ASL request torque is a request torque for the engine which is determined corresponding to a set value of a limiting vehicle speed set by a driver. A minimum combustion torque is a minimum wheel drive torque which is realizable by the combustion in the engine. That is, the minimum combustion torque is a torque when the vehicle is driven with a minimum amount of air which can be realized by closing a throttle and in a state where an angle of ignition timing is delayed to a limit. The minimum combustion torque may be a constant univocally determined based on the engine or may be set as a variable obtained by calculation based on an engine speed, a cooling water temperature, a gear ratio or the like. The engine speed is a speed of the engine.

The engine control part 10 determines whether or not a fuel injection cut is to be performed as described later. When it is determined that the fuel injection cut is performed, the engine control part 10 supplies a control signal 14 to various parts of the engine so that a fuel injection cut is performed.

One embodiment of a vehicle limiting device of the present invention is explained with respect to a fuel injection cut during an ASL control. In this embodiment, when ASL control status is ACTIVE, in addition to "driver request torque" which is a torque that a driver requests an engine by way of an accelerator pedal, "ASL request torque" determined based on a vehicle speed which the driver sets is calculated by the engine control part 10. In the engine control part 10, a value of the smaller torque out of "driver request torque" and "ASL request torque" is selected, and the selected torque is instructed to the engine as a request torque for the engine (vehicle speed limiting request torque).

When the driver changes an ASL set vehicle speed thus setting a value smaller than an actual vehicle speed as a predetermined vehicle speed or when a vehicle is accelerated in a descending slope or the like so that an actual vehicle speed exceeds an ASL set vehicle speed, an ASL request torque becomes smaller than a minimum combustion torque. In one embodiment of the present invention, even in a state where the driver steps in the accelerator pedal, when the ASL request torque is smaller than the minimum combustion torque, a fuel injection cut is performed.

Fig. 2 is a timing chart showing timing for performing a fuel injection cut according to one embodiment. As shown in the timing chart, a case is described where the accelerator pedal is in an ON state and the ASL status is ACTIVE. In Fig. 2, a case is described where an ASL set vehicle speed is changed to 60km/h from 80km/h by a driver at a point of time t1. In a conventional method where a fuel injection cut is not performed when an accelerator pedal is stepped in, the deceleration is performed by controlling a most delayed angle of ignition timing and minimizing of an amount of air (indicated by a broken line in the drawing). On the other hand, in the method of the present invention where a fuel injection cut is performed, when an ASL set vehicle speed is changed to 60km/h from 80km/h, an actual vehicle speed (80km/h) exceeds the set vehicle speed (60km/h) and hence, the ASL request torque becomes smaller than a minimum combustion torque. Accordingly, a fuel injection cut is performed at this timing. A solid line of the vehicle speed in the drawing indicates the deceleration when a fuel injection cut is performed.

Fig. 3 is a view showing the behavior of a torque when a fuel injection cut is performed in Fig. 2. A torque τ is taken on an axis of ordinates and time t is taken on an axis of abscissas in Fig. 3. Symbol 20 indicates a driver request torque, symbol 22 indicates an ASL request torque, and symbol 24 indicates a minimum combustion torque. As shown in Fig. 3, an ASL request torque becomes smaller than a minimum combustion torque at the point of time t1 and hence, a fuel injection cut is performed at the point of time t1.

In this manner, according to this embodiment, even in a state where a driver steps in the accelerator pedal, when an actual vehicle speed exceeds an ASL set vehicle speed, a fuel injection cut can be performed and hence, a follow-up performance of the actual vehicle speed to the ASL set vehicle speed can be enhanced. Further, since the operation of the vehicle limiting device is shifted to a fuel injection cut at the time of performing the deceleration in the ASL control, it is possible to obviate the combustion where an amount of air is minimized and ignition timing is set to a most delayed angle. As a result, a risk of the occurrence of a low load misfire can be eliminated. Further, a traveling region where the fuel injection operation is shifted to a fuel injection cut is enlarged and hence, a fuel consumption amount can be suppressed whereby fuel economy can be enhanced. Further, a larger deceleration can be realized compared to the prior art by a fuel injection cut and hence, it is possible to enlarge a range of gradient in which vehicle speed can be controlled by an ASL control on a descending slope.

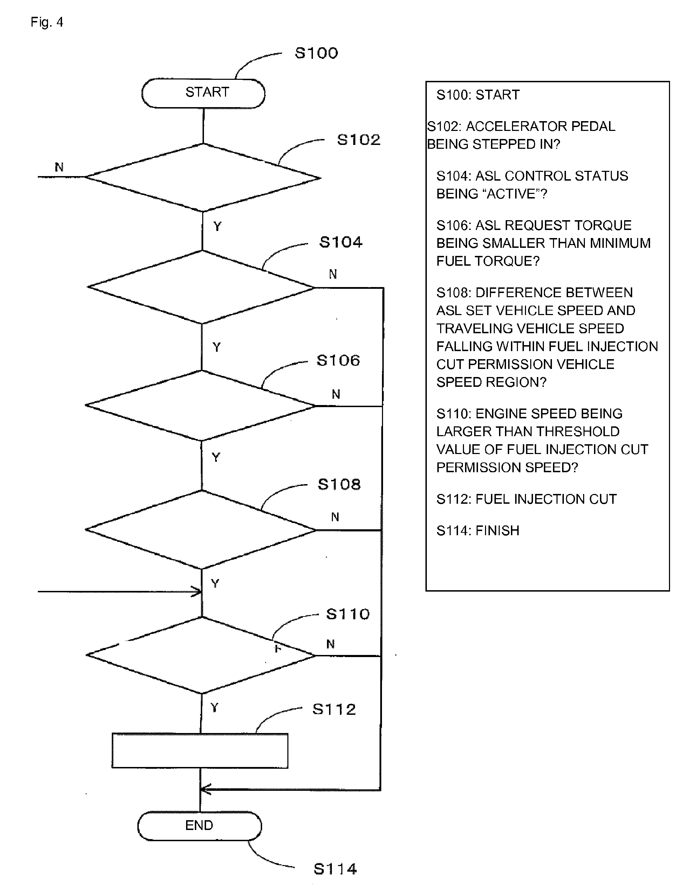

A method of determining a fuel injection cut by the vehicle speed limiting device according to one embodiment of the present invention is explained with reference to Fig. 4.

In step S100, this flow starts. Steps shown in the drawing are repeatedly performed at fixed time intervals, for example, every 10ms.

In step S102, it is determined whether or not the accelerator pedal is stepped in by a driver. This can be determined based on a signal 12 from an accelerator pedal position sensor arranged on the accelerator pedal of the vehicle. In step S102, when it is determined that the accelerator pedal is not stepped in by the driver, the processing advances to step S110 described later. When it is determined that the accelerator pedal is stepped in by the driver, the processing advances to step S104.

In step S104, it is determined whether or not an ASL control status is ACTIVE. Such determination can be made based on a signal 12 indicative of an ASL control status. When it is determined that the ASL control status is not ACTIVE, the processing is finished. When it is determined that the ASL control status is ACTIVE, the processing advances to step S106.

In step S106, an ASL request torque and a minimum combustion torque are compared to each other, and it is determined whether or not the ASL request torque is smaller than the minimum combustion torque. When it is determined that the ASL request torque is larger than the minimum combustion torque, the processing is finished. When it is determined that the ASL request torque is smaller than the minimum combustion torque, the processing advances to step S108.

In step S108, it is determined whether or not a difference between an ASL set vehicle speed and a traveling vehicle speed of the vehicle falls within a predetermined range (fuel injection cut permission vehicle speed region). When the difference between the ASL set vehicle speed and the traveling vehicle speed of the vehicle does not fall within the fuel injection cut permission vehicle speed region, the processing is finished. When the difference between the ASL set vehicle speed and the traveling vehicle speed of the vehicle falls within the fuel injection cut permission vehicle speed region, the processing advances to step S110. The fuel injection cut permission vehicle speed region may be set such that the difference between the ASL set vehicle speed and the traveling vehicle speed of the vehicle falls within a range of 3km/h to 5km/h, for example.

In step S110, it is determined whether or not an engine speed is larger than a threshold value of a fuel injection cut permission speed. When it is determined that the engine speed is smaller than the threshold value, the processing is finished. When it is determined that the engine speed is larger than the threshold value, the processing advances to step S112. The threshold value of the fuel injection cut permission speed may be set to 2000rpm, for example, so as to prevent lowering of rotation and an engine stop caused by an overload applied to the engine.

In step S112, the engine control part 10 requests the engine a fuel injection cut. Then, the processing is finished in step S114.

In the embodiment described above, a fuel injection cut is not performed unless the difference between an ASL set vehicle speed and a traveling vehicle speed becomes a fixed value or more. Accordingly, even under a traveling condition where an ASL request torque and a minimum combustion torque balance with each other on a descending slope or the like, it is possible to suppress the occurrence of so-called fuel cut hunching where a fuel injection cut is repeated at a short cycle.

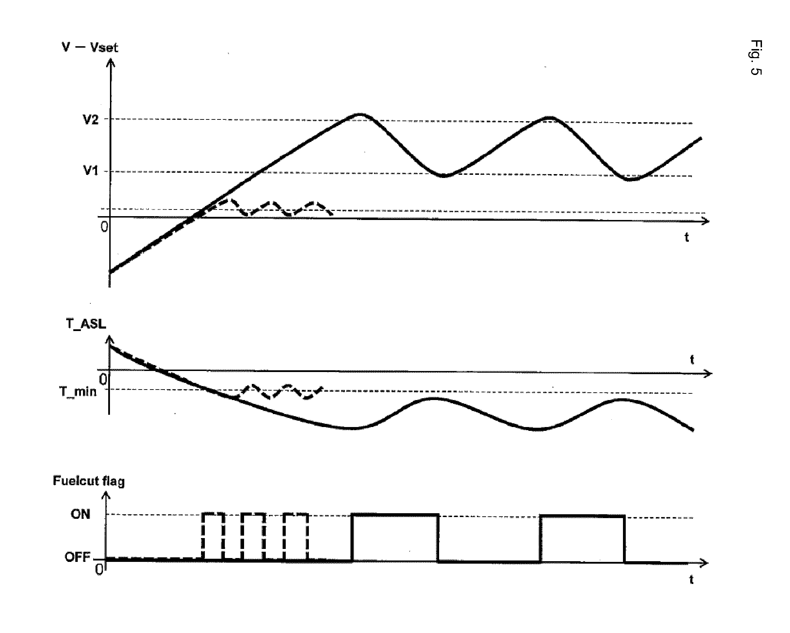

Fig. 5 is a graph showing a change with time of a state of a vehicle in a case where a fuel injection cut permission vehicle speed region is provided and a change with time of a state of a vehicle in a case where the fuel injection cut permission vehicle speed region is not provided with respect to the determination on a fuel injection cut. An uppermost graph shown in the drawing is a graph where a value (V-Vset) which is obtained by subtracting an ASL limiting vehicle speed from a traveling vehicle speed of a vehicle is taken on an axis of ordinates and a time (t) is taken on an axis of abscissas. A graph at the center of the drawing is a graph where an ASL request torque (T_ASL) is taken on an axis of ordinates and a time (t) is taken on an axis of abscissas. The lowermost graph in the drawing indicates a change with time of ON/OFF of a fuel injection cut (fuel cut flag). In the drawing, a broken line indicates a case where the fuel injection cut permission vehicle speed region is not provided, and a solid line indicates the case where the fuel injection cut permission vehicle speed region is provided. In the drawing, the case is assumed where the vehicle is on the descending slope and a vehicle speed of the vehicle exceeds a limiting vehicle speed.

As shown in the drawing, when the fuel injection cut permission vehicle speed region is not provided (indicated by the broken line), a fuel injection cut is performed when an ASL request torque (T_ASL) becomes smaller than the minimum combustion torque (T_min). In the example shown in the drawing, a speed (V) of the vehicle is gradually increased, and an ASL request torque (T_ASL) is decreased. A fuel injection cut is performed when the ASL request toque (T_ASL) becomes smaller than the minimum combustion torque (T_min). As a result, the vehicle speed (V) is lowered, and the vehicle speed (V) becomes smaller than the ASL limiting vehicle speed (Vset). Since the vehicle is in a state where the accelerator pedal is stepped in by a driver, a fuel injection is started so that a traveling speed of the vehicle is accelerated. Along with the acceleration of the traveling speed of the vehicle, the vehicle speed (V) exceeds the ASL limiting vehicle speed (Vset) again, and the ASL request torque (T_ASL) becomes smaller than the minimum combustion torque (Tmin). As a result, a fuel injection cut is performed again so that the vehicle speed (V) is lowered again. When such operations are repeated at a short cycle, fuel injection cut hunching occurs so that traveling comfortableness is deteriorated.

On the other hand, when the fuel injection cut permission vehicle speed region is provided, as indicated by a solid line in the drawing, a cycle at which a fuel injection cut is performed is extended. In the example shown in the drawing, a fuel injection cut is permitted when a difference (V-Vset) between a speed (V) of the vehicle and an ASL set vehicle speed (Vset) exceeds V2, and the fuel injection cut is inhibited when the difference (V-Vset) between the speed (V) and the ASL set vehicle speed (Vset) becomes smaller than V1. To be more specific, the speed (V) of the vehicle is gradually increased and the ASL request torque (T_ASL) is decreased. Then, the ASL request torque (T_ASL) becomes smaller than a minimum combustion torque (T_min). However, at this point of time, the difference (V-Vset) between the speed (V) of the vehicle and the ASL set vehicle speed (Vset) is smaller than V2 and hence, a fuel injection cut is not performed. Then, when the vehicle speed (V) is further increased so that the difference (V-Vset) between the speed (V) of the vehicle and the ASL set vehicle speed (Vset) exceeds V2, a fuel injection cut is performed. Then, when the vehicle speed (V) is lowered so that the difference (V-Vset) between the speed (V) of the vehicle and the ASL set vehicle speed (Vset) becomes smaller than V1, the fuel injection cut is inhibited and the fuel injection is started. Accordingly, a torque of the vehicle is increased so that the vehicle speed (V) is increased. When the difference (V-Vset) between the speed (V) of the vehicle and the ASL set vehicle speed (Vset) exceeds V2, a fuel injection cut is performed. Accordingly, V1, V2 can be properly set and hence, a cycle of ON/OFF of the fuel injection cut can be extended thus alleviating a drawback relating to traveling comfortableness. As one example, V1 may be set to 3km/h and V2 may be set to 5km/h.

Although the embodiment of the present invention has been explained as described above, the present invention is not limited to the above-mentioned embodiment. Further, it is not always necessary to carry out all technical features described in the above-mentioned embodiment. For example, some steps in the flowchart shown in Fig. 4 may be omitted or other processing may be added.

## Claims

1. A vehicle speed limiting device of a vehicle comprising: an engine control part for controlling an operation of an engine of the vehicle, wherein the engine control part is configured to control the engine such that when a vehicle speed limiting function is operated, a vehicle speed limiting request torque with respect to the engine does not exceed a predetermined value determined based on a set vehicle speed, and
the engine control part is configured to control the engine such that a fuel injection cut is performed in a case (1) where the vehicle speed limiting request torque is smaller than a minimum combustion torque corresponding to a minimum torque value which is realizable by the combustion in the engine in a state where the vehicle speed limiting function is operated and a driver operates an accelerator pedal of the vehicle.

2. The vehicle speed limiting device according to claim 1, wherein the engine control part is configured to control the engine such that the fuel injection cut is performed in a case (1) where the vehicle speed limiting request torque is smaller than a minimum combustion torque corresponding to a minimum torque value which is realizable by the combustion in the engine and in a case (2) where a speed of the vehicle exceeds the set vehicle speed by a predetermined value.

3. A method for limiting a vehicle speed of a vehicle, the method comprising the steps of:
controlling an engine such that when the vehicle speed limiting function is operated, a vehicle speed limiting request torque with respect to the engine does not exceed a predetermined value determined based on a set vehicle speed; and
controlling the engine such that a fuel injection cut is performed in a case (1) where the vehicle speed limiting request torque is smaller than a minimum combustion torque corresponding to a minimum torque value which is realizable by the combustion in the engine in a state where the vehicle speed limiting function is operated and a driver operates an accelerator pedal of the vehicle.

4. The method for limiting a vehicle speed of a vehicle according to claim 3, further comprising the step of controlling the engine such that the fuel injection cut is performed in a case (1) where a vehicle speed limiting request torque is smaller than a minimum combustion torque corresponding to a minimum torque value which is realizable by the combustion in the engine and in a case (2) where a speed of the vehicle exceeds the set vehicle speed by a predetermined value.
